# EUROPEAN PATENT SPECIFICATION

(11) **EP 0 355 777 B1**
(45) Date of publication and mention of the grant of the patent: **27.12.1995**
(21) Application number: 89115409.8
(22) Date of filing: 21.08.1989
(51) Int. Cl.: H04Q 11/04, H04M 1/57, H04M 11/06, H04M 3/48

(54) **Communication apparatus for displaying information concerning call receptions**
Kommunikationsgerät zur Darstellung von Informationen bezüglich empfangener Anrufe
Appareil de communication pour l'affichage d'informations relatives à la réception d'appels

(30) Priority: 22.08.1988 JP 206296/88; 22.08.1988 JP 206297/88; 24.08.1988 JP 208275/88; 28.11.1988 JP 298286/88; 28.11.1988 JP 298287/88
(43) Date of publication of application: 28.02.1990
(73) Proprietor: CANON KABUSHIKI KAISHA, Tokyo (JP)
(72) Inventor: Takashima, Shoichi, Ohta-ku Tokyo (JP); Nakatsuma, Takuji, Machida-shi Tokyo (JP)
(74) Representative: Tiedtke, Harro, Dipl.-Ing.

(56) References cited:
- DE-A- 2 931 254
- DE-A- 3 128 529
- DE-A- 3 329 267
- PHILIPS TELECOMMUNICATION REVIEW. vol. 45, no. 3, September 1987, HILVERSUM NL pages 35 - 41; P.B.Hesdahl: "The digital voice/data-terminal SOPHO-SET S375D "

## Description

The present invention relates to a communication apparatus such as a telephone set for speech communication, a facsimile apparatus for image data communication, and the like.

### Related Background Art

With a telephone set connected to a conventional general public telephone network, the telephone number of a communication partner (or calling party) is not notified from the network so that the communication partner cannot be identified. Therefore, for example, if a called party is not present at the telephone set, the calling party cannot be identified.

If a care-taking telephone set for dealing with one's absence is used with a general public telephone network, this telephone set automatically responds to a call during absence and records a message from the communication partner, so that the call can be recognized by the called party by reproducing the message. If the communication partner has not left any message, then the called party cannot know if any call was initiated during the absence.

A telephone set connected to a conventional public telephone network has thus the following problems:
(1) A message is not recorded unless the telephone set automatically responds to the call. There is not provided means for knowing who is the communication partner prior to responding to the call.
(2) even if a calling party can be identified and a call is made to the calling party at the later time, the telephone number of the calling party should be dialed to effect a connection to the calling party.

Integrated Services Digital Network (ISDN) has now been made widely used, which allows high speed and large capacity data transmission. In ISDN, one circuit is constructed of three communication channels, i.e., two data channels (B channel) and one control channel (D channel). A single circuit or line can connect eight terminal equipments at a maximum.

The call connection procedure and the like procedure at this circuit is performed using the control channel (D channel).

ISDN has a service for notifying of a called party of the number of a communication partner. By using this service, the name of a communication partner having its specific number can be displayed upon reception of a call. However, conventionally, if a telephone set connected to ISDN does not respond to a call, the above display procedure is not effected, so that even if a call was made during one's absence, the called party cannot know if there was the call.

A facsimile apparatus for image data communication is also associated with such a problem. Namely, if there occurs a local error such as no recording sheet, memory full-state or the like, the data transmitted from a communication partner to a called party after the call reception, cannot be received. In such a case, conventionally, the call reception is therefore rejected. Even if an operator knows a local error after the call, the communication partner or calling party requested the call during the local error cannot be identified.

From the DE-A-3 329 267 a method usable in a telephone system for connecting mobile subscriber's equipment, in particular for wireless mobile subscriber's equipment, is known, wherein at a host system storage means are provided accessable by all stationary subscribers after having dialed the subscriber number of a mobile equipment, wherein at a storage location information controlling the teleconnection can be stored said information being necessary for a recall from said called mobile subscriber's equipment, and wherein, furthermore, when the call of said mobile subscriber's equipment is made, the subscriber number of the calling stationary subscriber's equipment is transmitted to said mobile subscriber's equipment and stored in a storage means provided therein, characterized in that in case a call to said mobile subscriber's equipment has already been made, the teleconnection with said calling stationary subscriber's equipment is automatically established by said mobile subscriber's equipment, for example by pressing a single key, by means of transmitting the identifying label fixedly stored in said storage means of said mobile subscriber's equipment and the subscriber number of said stationary subscriber's equipment from said mobile subscriber's equipment to said host system.

Furthermore, from Philips Telecommunication Review, vol. 45, no. 3, September 1987, Hilversum, NL, pages 35-41 (P.B. Hesdahl) a communication apparatus according to the preamble of Claim 1 is known.

### SUMMARY OF THE INVENTION

It is an object of the present invention to solve the above-described prior art technical problems and to provide a communication apparatus capable of identifying the number of a communication partner which made a call during the called party absence and the number of call times, to thereby allow ready recognition of the degree of emergency of the calling party.

The above and other objects of the present invention will become apparent from the following detailed description when read in connection with the accompanying drawings.

### BRIEF DESCRIPTION OF THE DRAWINGS

Fig. 1 is a connection diagram of a digital telephone set connected to ISDN:
Fig. 2 is a block diagram showing the structure of the digital telephone set of Fig. 1;
Fig. 3 is a diagram showing a call control sequence;
Fig. 4 is a flow chart showing a first call reception procedure (or processing);
Fig. 5 is a flow chart showing a first call reception confirmation procedure;
Fig. 6 is a flow chart showing a second call reception procedure;
Fig. 7 is a detailed block diagram showing the facsimile apparatus shown in Fig. 1;
Fig. 8 is a flow chart showing a third call reception procedure;
Fig. 9 is a flow chart showing the procedure of displaying a communication partner number upon reception of a call while a local error occurs;
Fig. 10 is a block diagram showing a multi-function telephone set;
Fig. 11 is a plan view of the multi-function telephone set shown in Fig. 10;
Figs. 12A and 12B are operation flow charts;
Fig. 13 is a diagram showing the storage area for a calling party number in RAM 103;
Fig. 14 shows a communication partner number table in RAM 103;
Fig. 15 shows a display example on a display unit;
Fig. 16 is a flow chart showing the operation according to the invention;
Fig. 17 shows a communication partner number table in RAM 103 in accordance with the invention;
Fig. 18 shows a display example on a display unit in accordance with the invention; and
Figs. 19 and 20 show a further table in RAM 103 and a further display example on a display unit.

### DETAILED DESCRIPTION OF THE DRAWINGS

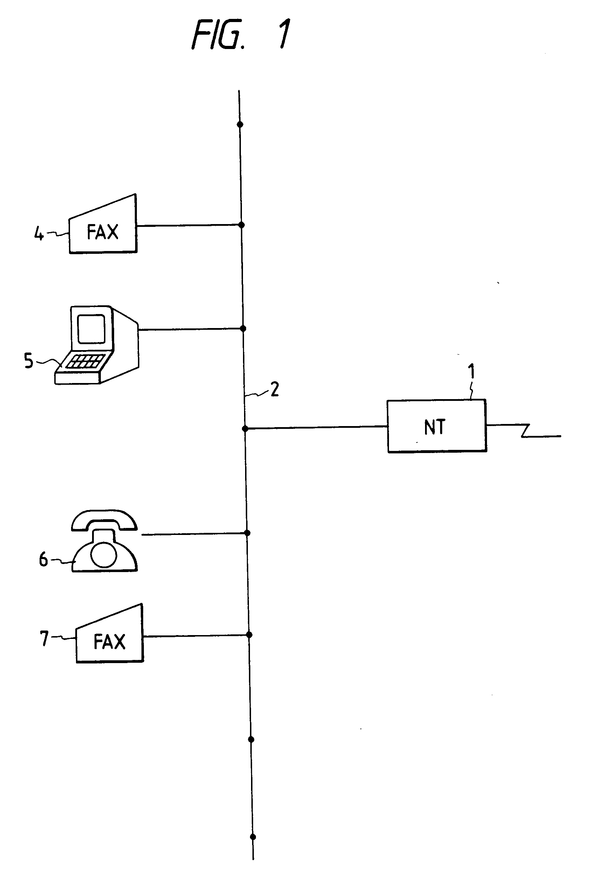

Fig. 1 shows terminal equipment units connected to ISDN. In Fig. 1, reference numeral 1 represents a network terminating unit, 2 a bus for interconnecting the network terminating unit 1 and a plurality of terminal equipments, 4 and 7 a facsimile apparatus, 5 a telex terminal, 6 a digital telephone set.

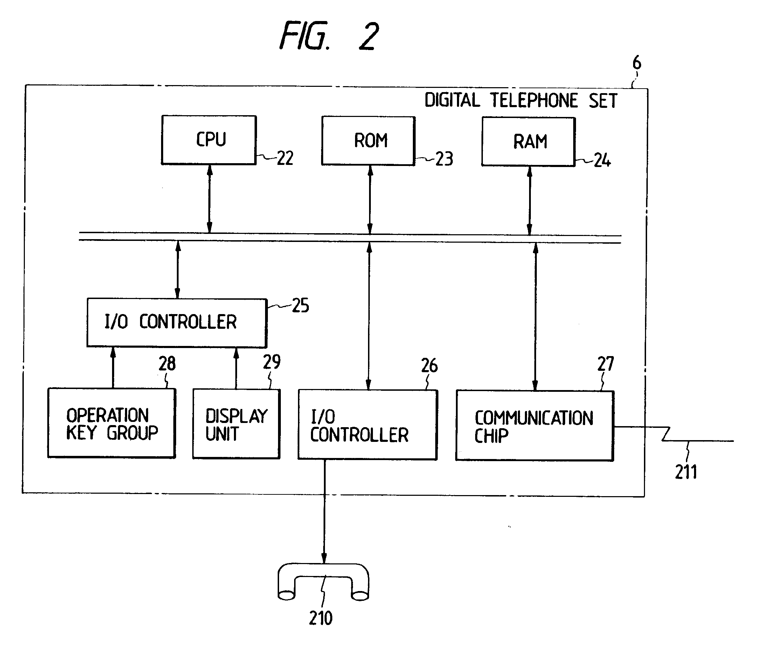

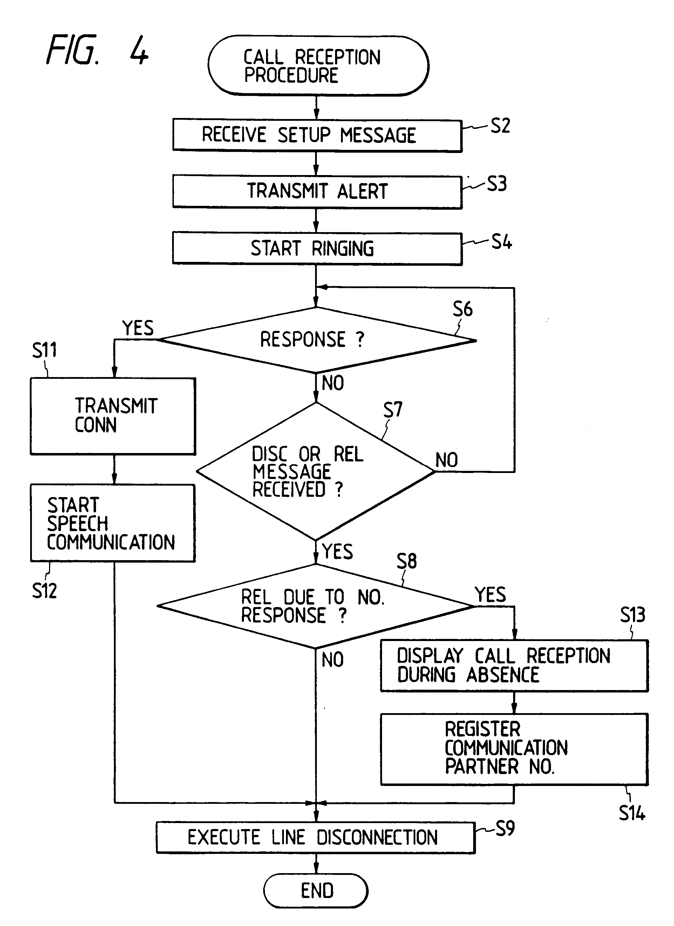

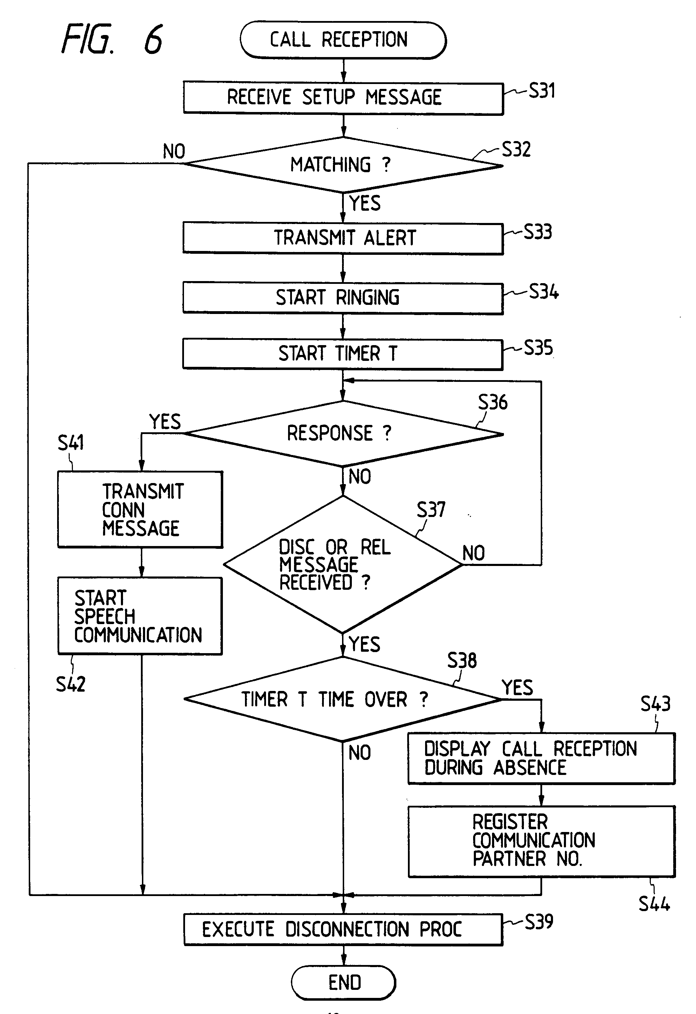

Fig. 2 is a block diagram showing the structure of the digital telephone set 6. In Fig. 6, reference numeral 22 represents a CPU for controlling the terminal equipments, 23 a ROM for storing programs for the operation processing procedure of CPU 22, and 22 a RAM to be used as a working area by CPU 22. ROM 23 stores therein the programs associated with the flow charts shown in Figs. 4 to 6 to be described later. An input/output (I/O) controller 25 controls the input of data upon depression of a key among an operation key (button) group 26, and the output of display data onto a display unit 29. An I/O controller 26 controls the input/output with respect to a handset 210, and a communication chip 27 controls the communication via an ISDN bus circuit 211.

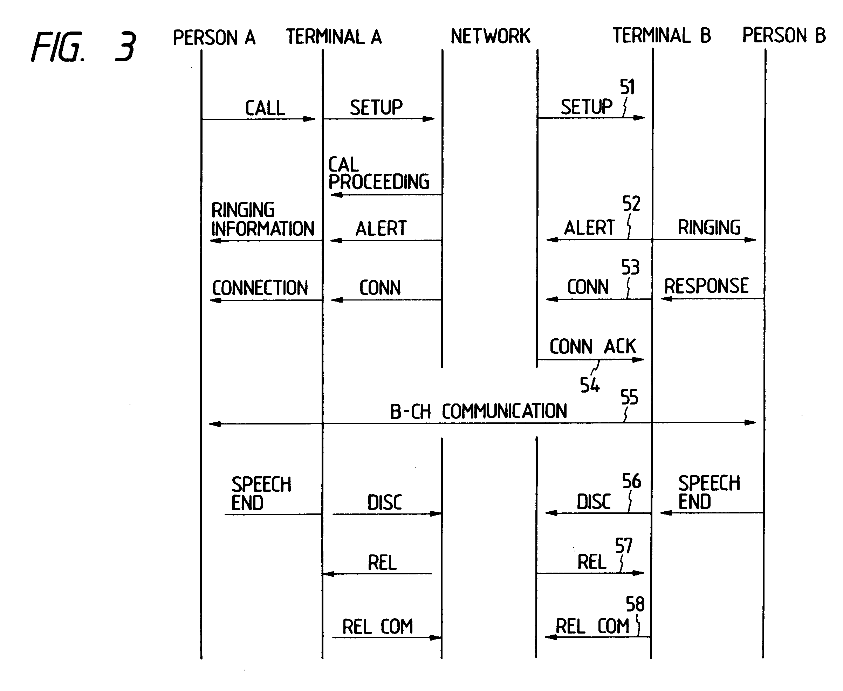

Fig. 3 shows a D-channel protocol upon call reception at the digital telephone set 6 constructed as above. The procedure executed by the telephone set will be described with reference to Fig. 4.

Upon reception of a call SETUP message from the network at step S2, a called party terminal equipment B checks at step S3 the integrity (or matching) whether the setup message is allowed to be received or not. If the judgement is affirmative, at the same step S3, an ALERT signal is returned to generate a sound at the calling party. Thereafter, a bell or the like is driven to start ringing at step S4.

Next, at step S6, it is checked if an operator has hooked off the handset 210 to respond the call reception, and at step S7 it is checked if a call release message such as a DISConnection message is received from the network.

If an off-hook of the handset 210 is detected, the control advances from step S6 to Step S11 whereat a CONNection signal is returned to perform an ordinary call processing, and thereafter at step S12 a speech communication starts. After completion of the speech, a circuit (or line) disconnection process is performed at step S9.

If a call release message such as a DISConnection message, RELease message, or the like is received, the control advances from step S7 to step S8.

At step S8, a call release reason code contained in the call release message received at step S8 is picked up to check if the reason code indicates that "a disconnection or release from a user not selected". This code indicates that another terminal equipment connected to the same ISDN circuit has responded. Therefore, if the picked-up reason code indicates the other contents, it is judged that the call release message has been generated due to no response (absence of operator).

If it is judged as a call release due to no response, the control advances to step S13 to display a message (stored in ROM) indicative of a call reception during absence, on the display unit 29 via the I/O controller 25. At step S14, sub-address information contained in the SETUP message is picked up and stored in RAM 24 at a communication partner number area. Then, at step S9 a circuit disconnection process is carried out.

If NO in step S8, since it is judged that other terminal responds, so that the process in steps S13 and S14 are not carried out and the circuit disconnection process is carried out at step S9.

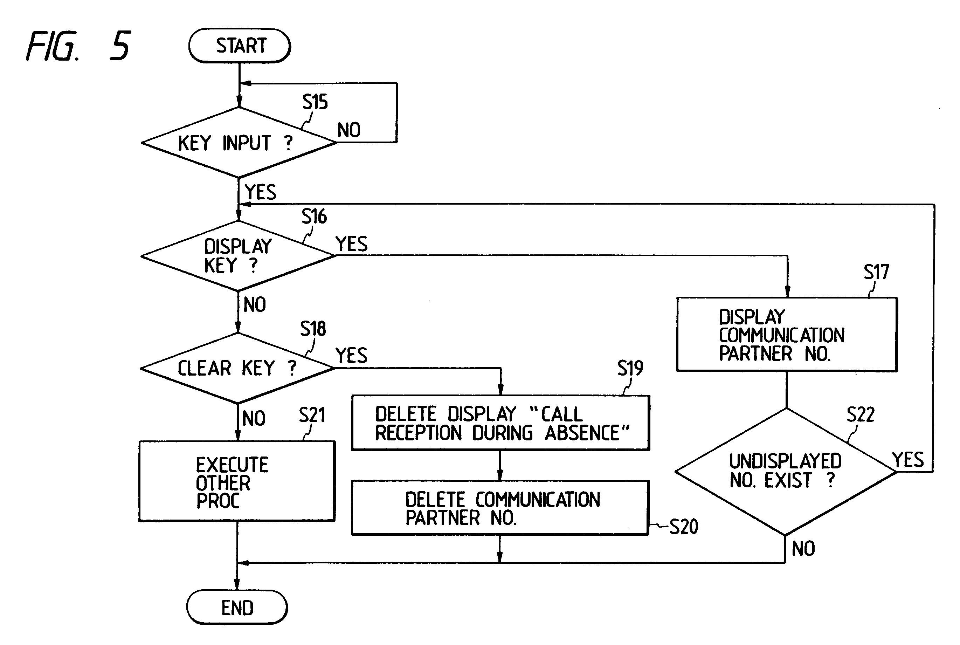

Next, the process to be executed by an operator returned to the terminal equipment will be described with reference to the flow chart shown in Fig. 5.

The operator returned to the equipment installation site can recognize the message "call reception during absence" which was displayed at step S13 of Fig. 4.

Upon depression of a key in the operation key group 26, the following processes start.

First, upon detection of a depression of a key among the operation key group 26, it is checked at step S16 if the input key is a display key or not. If it is the display key, at step S17 the communication partner number stored at the call reception process is read from RAM 24 to display it on the display unit 29 so that the operator can know the communication partner which made a call.

If there were a plurality of calls during absence, these communication partner numbers are also stored in RAM 24. Therefore, if communication partner numbers not displayed at step S22 are still in RAM 24, the control returns to step S16 to detect a depression of the display key. Each time the display key is depressed, the communication partner numbers are sequentially displayed. The communication partner numbers may be sequentially displayed at the timing of depressing the display key, e.g., every three seconds. Consequently, a plurality of communication partner numbers can be displayed sequentially using a single display key, thus allowing a simple arrangement of the equipment. In addition, the space occupied by the display unit can be minimized.

Alternatively, if the entered key is not the display key, the control advances to step S18 whereat it is checked if the entered key is a clear key. Upon detection of a depression of the clear key, the display "call reception during absence" having been displayed is erased at step S19. Then, at step S20 the stored communication partner numbers are deleted from RAM 24. The calling party numbers may be deleted in the calling order.

If the depressed key is judged as not the clear key (e.g., judged as an off-hook key), then the control advances to step S21 to execute the necessary process.

As described above it is possible to notify the fact that there was call reception during absence, and notify the identification of the communication partner.

If there were a number of call receptions during absence, all the call receptions are registered so that the numbers of the calling party terminal equipments can be notified.

A display "call reception during absence" has been used. However, a call reception notice may be made by turning on a lamp or the like.

In storing the communication partner number, not only the calling party number and sub-address but also the call reception time and other information may be stored.

Further, a call reception during an operator absence has been judged based on the reason code at step S8 of Fig. 4. However, the message or the like received from the network may be used as the basis of such judgement in the similar manner as of the reason code.

Furthermore, although a digital telephone set has been used by way of example, other equpments may also be used.

As described so far, it is possible to know a call reception during absence and know its identification.

Further, even if a plurality of call reception were made during absence, they can be stored and displayed to notify the calling party terminal equipment numbers.

As described above, a call release due to no response is detected based on the reason code contained in a call release message received from the network. In the following, however, a call release due to no response is judged if there is no response within a predetermined period after the start of ringing.

The control to be described in the following can be realized by the same structure as that shown in Fig. 2.

The call reception procedure will be described with reference to Figs. 3 and 6. In the following description, it is assumed that a person A at a calling party telephone set A initiates a call request to a person B at a called party telephone set B.

When person A initiates a call to person B, person A hooks off the handset of the telephone set A to thereafter designate the call destination. Then, the telephone set B is selected and a setup command is sent via ISDN from telephone set A to telephone set B as indicates at 51 in Fig. 3. In this case, the processes at the telephone set B are as shown in Fig. 6.

First, at step S31 the setup message (indicated at 51 in Fig. 5) sent from the calling party telephone set A (terminal A) is received via the communication chip 27. At the next step S32, the integrity (matching) of the received setup message is checked. If there is no integrity, the control advances to step S39 whereat the communication chip 27 (Fig. 2) is instructed to cause the call disconnection process to be executed, to thereafter terminate the operation. This disconnection process is carried out, for example, by executing the sequence shown at DISC 56 to REL COM 58 steps shown in Fig. 3.

If there is an integrity of the setup message at step S32 and the setup message is allowed to be received, then the control advances to the processes at step S33 and following steps. Thereafter, the processes such as the sequence at ALERT 52 to BCH communication 55 steps are executed. First, at step S33 the ALERT message 52 is transmitted, and at the next step S34 a ringing sound is generated by driving a bell or the like to start calling an operator. At the same time, a call time supervising time T is made to start operating at step S35. Next, at steps S36 and S37, it is checked if the operator responds to the call by hooking off the handset 210 or a call release message such as a disconnectdion message is received from the network. If the I/O controller 26 detects an off-hook of the handset 210 and hence a response by the operator, then the control advances from steps S36 to S41. At step S41 a CONNection message is transmitted to conduct the ordinary call processing operation at step S42, to thereby enter into a speech communication.

After completion of the speech, the control advances to step S39 to effect a disconnection process and terminate the operation.

Alternatively, if for example a call release message such as a DISConnection message is received at steps S36 and S37 whereat it is checked if the operator respons to the call by hooking off the handset 210 or if a call release message such as a DISConnection message is received from the network, then the control advances from step S37 to step S38. At step S38 it is checked if the call time supervising timer T started operating at step S35 has counted up or not. If not, the control advances to step S39 whereat a disconnection process is performed to terminate the operation.

If the timer T has counted up at step S38, the control advances to step S43. In this case, it is judged that an operator is not present at the telephone set and cannot respond to the call reception. At step S43 a message "call reception during absence" is displayed on the display unit 29. At the next step S44, the calling party number and sub-address contained in the received setup message at step S32 are picked up to store them in RAM 24 at the communication partner display area. At step S39, a disconnection process is performed to terminate the operation.

As described above, if an operator is not present at the time of call reception or if no response is received, a message "call reception during absence" is displayed on the display unit 29. Therefore, when the operator returns back to the telephone set installation site, the operator can recognize the display "call reception during absence" on the display unit 29 and know that there was a call during the absence.

The processes executed when an operator is not present and cannot respond to a call are the same as described with Fig. 5, so the description therefor is omitted.

In the above, described is the case where the time during a call procedure is supervised and the call is maintained until a call release message is received from the network. However, another control may be used wherein a call is maintained for a predetermined period from the ringing start, and if there is no response from the operator within a predetermined period, then it is judged that the operator is not present, and so a call release message is sent from the called party telephone set to the network to disconnect the circuit.

In the above manner, it is possible to prevent making low the network use efficiency to be caused by unnecessary calls for a long time.

Furthermore, it is possible to know a call reception not responded and the identification thereof. In addition, a call reception not responded is detected by using a timer. Therefore, the structure of the equipment can be made more simple than the equipment which analyzes the reason code from the network.

Next, the case will be described wherein an apparatus for data communication such as a facsimile apparatus is used, and if a call reception is not automatically received due to a local error or the like, a calling party number is notified.

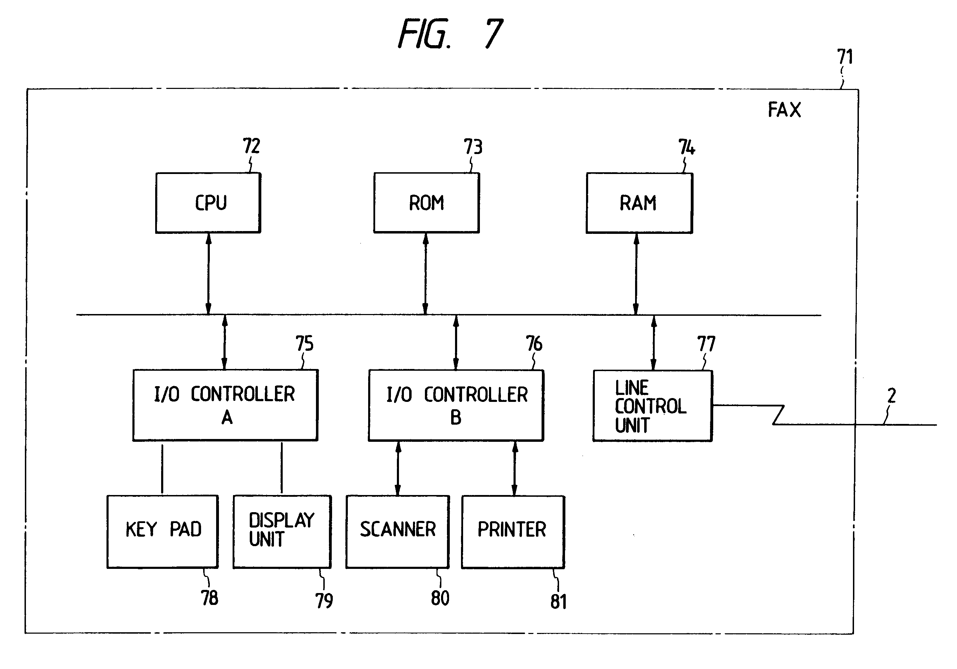

Fig. 7 is a detailed block diagram showing the digital facsimile apparatus 4 in the system shown in Fig. 1.

Referring to Fig. 7, reference numeral 2 represents the ISDN circuit shown in Fig. 1, 71 a digital facsimile apparatus, 72 a central processing unit for controlling the entirety of the apparatus in accordance with programs shown in flow charts to be described later and stored in ROM 73, 74 a RAM for storing transmission/reception data and the like, 75 an I/O controller A for controlling a key pad 78 and display unit 79, the key pad being used for the input of various instructions to the apparatus, 76 an I/O controller B for controlling a scanner 80 and a printer 81, the scanner being used for reading documents and the like and the printer being used for printing out reception data or the like, and 77 a circuit (line) control unit.

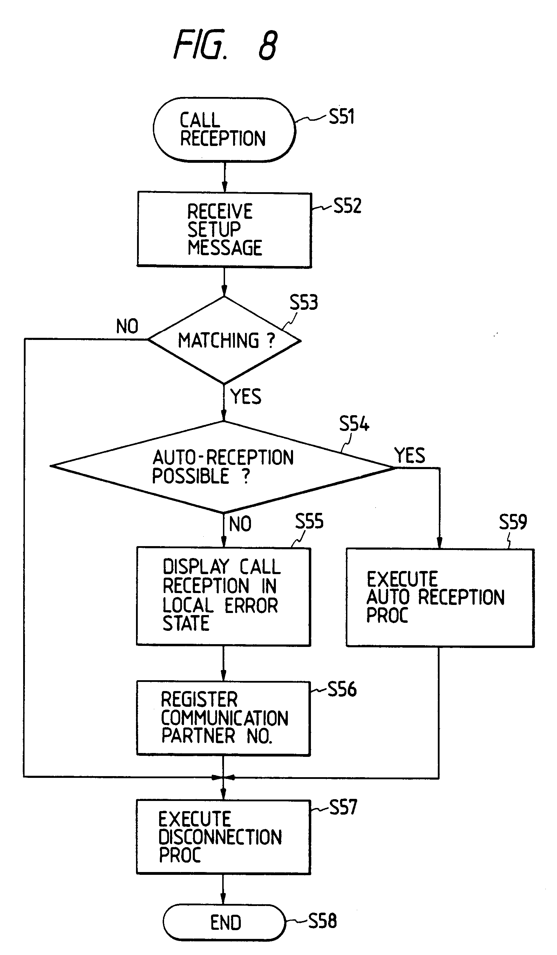

The control executed by the apparatus constructed as above will be described with reference to Figs. 3 and 8.

Fig. 8 is a flow chart showing a reception procedure executed by the apparatus.

First, the reception procedure will be described with reference to Figs. 3 and 8. It is assumed that terminal equipment A shown in Fig. 3 makes a call request to terminal equipment B.

The reception procedure executed by the digital facsimile apparatus 4 is performed in accordance with the flow chart shown in Fig. 8.

First, at step S52, a setup message (indicated at 51 in Fig. 3) sent from the calling party apparatus (terminal equipment A) is received via the circuit control unit 77. At the next step S53 the integrity of the received setup signal is checked. If there is no integrity, at step S57 the circuit control unit 77 is caused to execute a call disconnection process to terminate the operation. This disconnection process can be effected by executing, for example, the sequence from DISC 56 to REL COM 58 steps shown in Fig. 3.

If there is an integrity of the setup message at step S53, the information contained in the setup message is checked at step S54 to see if the setup message is allowed to be received (if an automatic reception is allowed). If affirmative, the automatic reception is conducted at step S59.

In this case, the sequence from ALERT 52 to B-CH communication 56 steps shown in Fig. 3 or the like sequence is executed to thereby receive facsimile data, store it in RAM, print it out to the printer 81, and perform like operations. The automatic reception is known in the art so that the detailed description therefor is omitted.

After the above processes, the control advances to step S57 whereat the circuit control unit 77 is caused to execute a disconnection process to terminate the operation. This disconnection process is effected, for example, by executing the sequence from DISC 56 to REL COM 58 steps shown in Fig. 3.

If it is judged at step S54 that the automatic reception is not allowed in the case of a local error such as no recording sheet at the printer 81, full-state of reception data storage area of RAM 74, and the like), the control advances to step S55 whereat the I/O controller A 75 makes the display unit 79 display thereon a message "call reception during local error". At the next step S56, the calling party number and sub-address contained in the setup message received at step S52 are picked up and stored in RAM 74 at the predetermined area. At step S57 a disconnection process is performed to terminate the operation.

The call reception procedure is carried out in the above manner. If the automatic reception is allowed, facsimile information from the communication partner apparatus is automatically received, and printed out at the printer 81 or stored in RAM 74. If the automatic reception is not allowed, a notice to such effect is displayed on the display unit 79, and the calling party number and sub-address are stored in RAM 74 at the predetermined area.

As described above, if a call reception is not allowed to be automatically received, a message "call reception during local error" is displayed on the display unit 79. Therefore, even if the operator is not present at that time at the called party facsimile apparatus (terminal equipment B) site, the operator when returned to the installation site can recognize the message "call reception during local error" displayed on the display unit 79 and know that the call was not allowed to be automatically received.

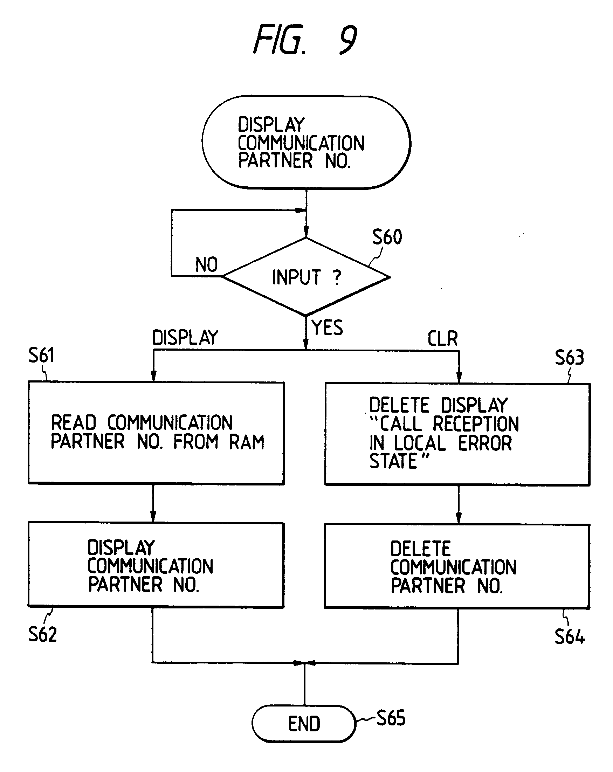

Next, the procedure for the case. where the automatic reception was not allowed will be described with reference to Fig. 9.

In this case, after the recognition of the display "call reception during local error", it is first determined if some measure is to be carried out or not upon checking the calling party. If no measure is carried out, a clear key in the key pad 78 is entered, and if some measure is carried out, a display key is entered.

After execution of the disconnection process at step S57, the input of the key pad 78 is monitored at step S60. If the display key is entered, the control advances from step S60 to step S61 whereat the calling party number and sub-address stored in RAM 24 at step S56 are read out to display them on the display unit 79 at step S62, to thereby notify the communication partner not allowed to be automatically received. The operator can therefore identify the communication partner based on the calling party number so that the operator calls the communication partner to ask for re-transmitting the facsimile data. In this case, the display on the display unit 79 may be used only, or the display and the printed data on the printer 81 may be used together.

Alternatively, if a call was not allowed to be automatically received and no measure for this is not needed, the clear key in the key pad 78 is entered. In this case, the control advances from step S60 to step S63 whereat the display "call reception during local error" displayed on the display unit 79 is erased, and at the next step S64 the calling party number and address stored in RAM 24 at step S56 are deleted, to thereafter terminate the operation.

As described above, even if facsimile data from an important communication partner was not received, the fact to such effect can be recognized and the calling party can be identified, to thus allow proper measure for this case.

In addition, in the case where no measure is needed, unnecessary printing is not carried out and the display and registered data are deleted, to thus avoid unnecessary power consumption and ensure cost effectiveness.

In the above description, the case where there are a plurality of call receptions during local error was not given. In such a case, the procedure shown in Fig. 8 is performed every time a call is received. Then, all the calling party numbers and sub-addresses stored in RAM 74 may be output upon instruction from an operator.

Further, in the above description, the display "call reception during local error" is made on the display unit upon call reception during local error. A lamp or the like may be used instead for notifying a call reception during local error.

As described above, if a digital facsimile apparatus or the like is under a local error state such as no recording sheet or full-state of memory and receives a call, then the fact to such effect is notified and the calling party number and sub-address are stored. Therefore, an operator when returned to the installation site can know the call reception during local error and identify the communication partner, to thus allow proper measure for such a case and improve the operability of the apparatus.

In the above, a calling party number is displayed if a call is received while an operator is not present. In the following, there will be described the case where an automatic call is initiated based on the displayed calling party number.

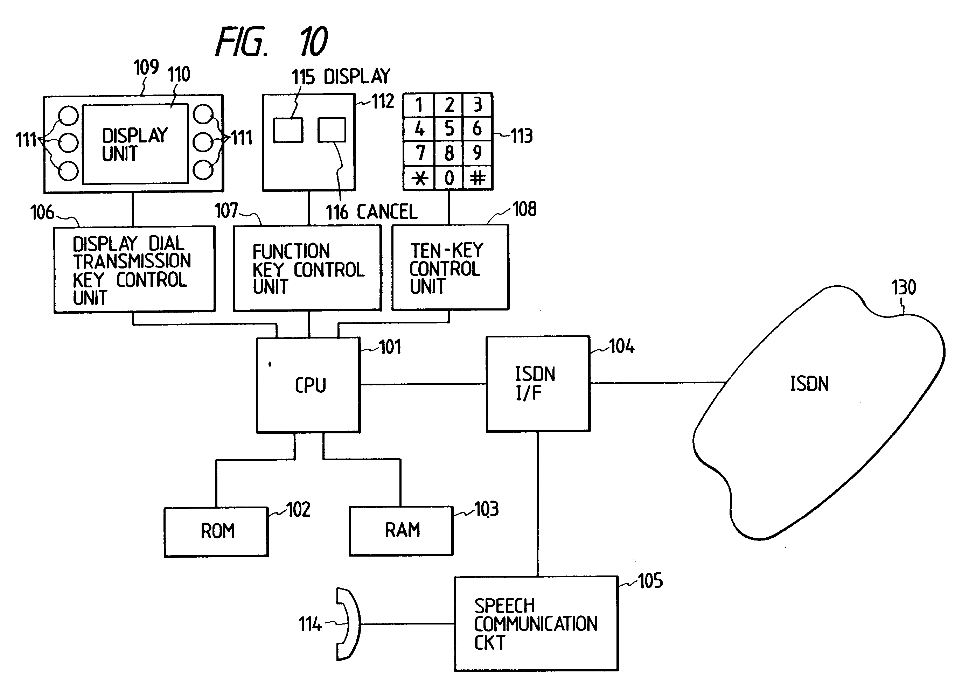

Fig. 10 is a block diagram showing a multi-function telephone set. The multi-function telephone set is connected to ISDN 130.

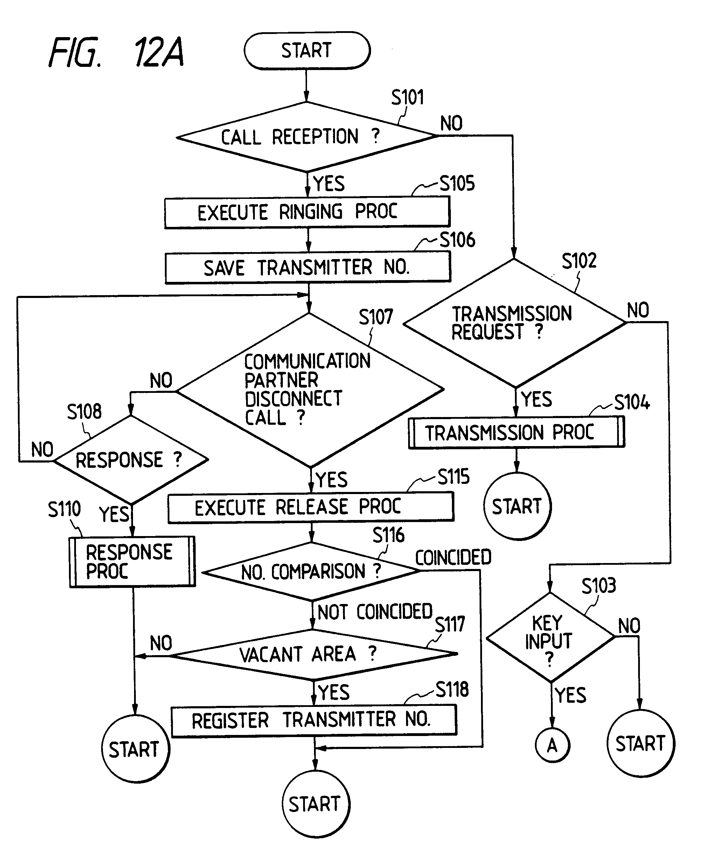

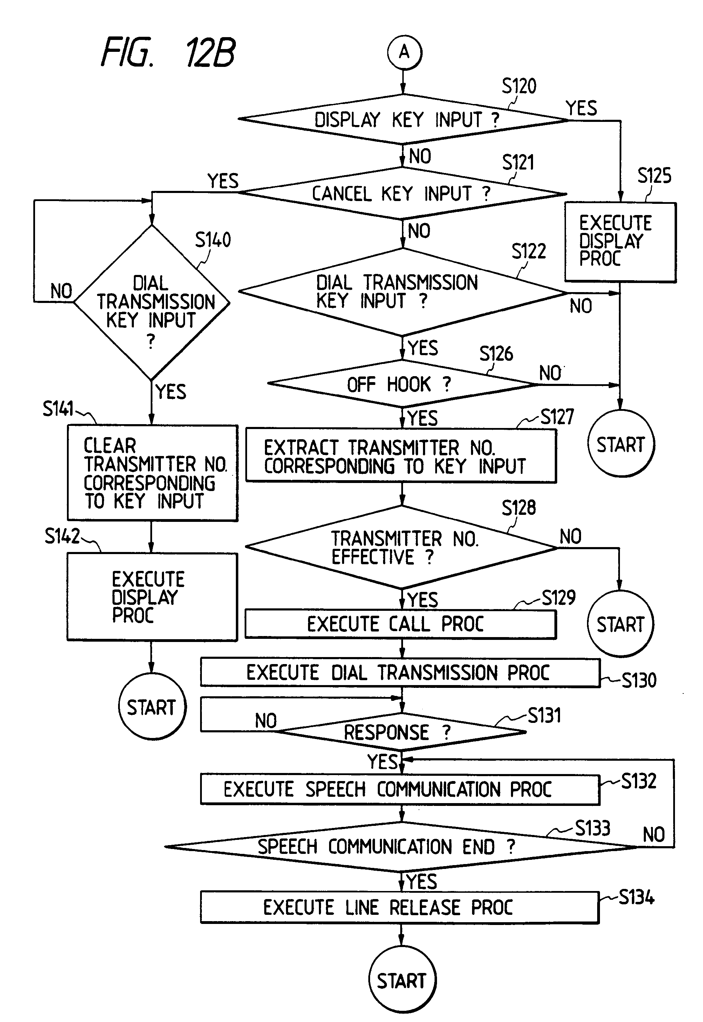

In Fig. 10, reference numeral 101 represents a central processing unit (CPU) for controlling the entirety of the telephone set in accordance with programs as shown in the flow charts of Figs. 12A, 12B and 6 stored in ROM 102 which also stores other parameters used, 103 a RAM for storing transmission/reception data and calling party number table to be described later, and the like, and 105 a speech communication circuit. The speech communication circuit 105 connected to a handset 114 converts a digital signal from an ISDN interface 104 into an analog signal which is sent to the handset 114, or converts an analog signal from the handset 114 into a digital signal which is sent to the ISDN interface 104.

A display/dial-transmission-key control unit 106 controls a display unit 110 and a dial-tansmission-key 111, a function key control unit 107 controls a function key 112, a ten-key control unit 108 controls a ten-key 113, a display panel 109 is equipped with a display unit 110 and the dial-transmission key 111, and a function panel 112 is equipped with a display key 115 and a cancel key 116. The ten-key 113 is used for inputting a communication partner number, and reference numeral 114 represents a handset.

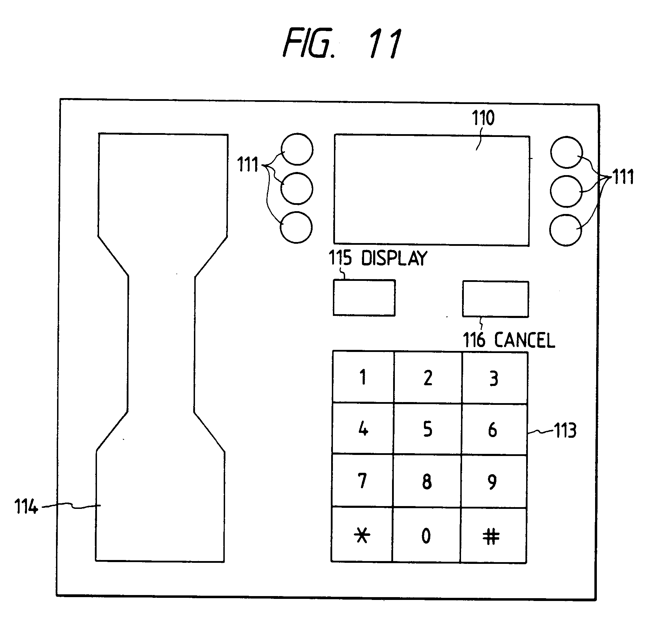

The plan view of the multi-function telephone set constructed as above is shown in Fig. 11 wherein like components to those in Fig. 10 are represented by identical reference numerals.

The operation of the multi-function telephone set constructed as above will be described with reference to the flow charts shown in Figs. 12A and 12B.

First, at steps S101 to S103, it is checked if there is a call reception from ISDN 130, if there is a transmission request upon off-hook of the handset 114, or if there is a key input.

When the handset 114 is hooked off, a transmission request is initiated and the control advances from step S102 to S104 whereat a transmission procedure is executed. In this case, an input of a calling party number from the ten-key 113 after the off-hook of the handset 114 is waited, transmission to the communication partner identified by a communication partner number instructed from the ISDN interface is carried out, and a desired communication procedure is conducted in accordance with a response from the communication partner. The transmission procedure will be described later where an automatic transmission to the communication partner corresponding to a display on the display panel 109 is performed upon entering the dial-transmission-key 111 for the displayed number.

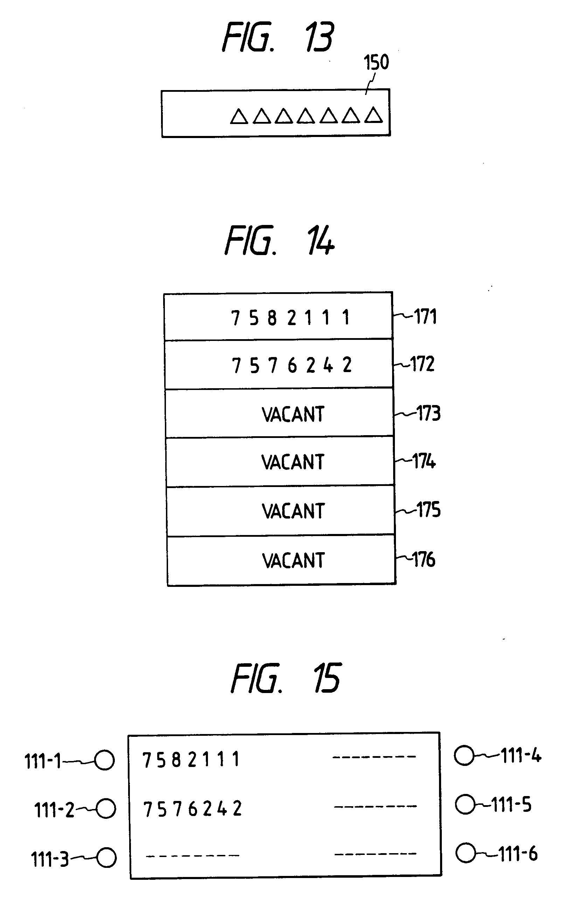

If a call reception is initiated from ISDN 130, a call reception command is sent therefrom. Therefore, this command is received at the ISDN interface 104 and sent to CPU 101 which analyzes it to judge a presence of a call reception so that the control advances from step S101 to step S105 whereat a ringing procedure is performed. At the same time, the calling party number (or transmitter number) contained in the call reception command received at step S106 is picked up and stored in RAM 103 at a predetermined area. The calling party number storage area in RAM 103 is an area wherein a single calling party number only is temporarily stored, as shown at 150 in Fig. 13.

At the next steps S107 and S108, the ringing state is maintained until the communication partner disconnects the call or off-hooks the handset 114. If the handset 114 is off-hooked in response to the ringing, the control advances from step S108 to step S110 to perform a communication procedure relative to ISDN 130.

Alternatively, if there is no response during the ringing and the calling party abandons the communication to thus send a communication party disconnection signal and disconnect the call, then the control advances from step S107 to step S115. At step S115 a release procedure request is output to the ISDN interface 104 to perform the release procedure relative to ISDN 130. At the next step S116, it is checked if the calling party number saved at step S106 is registered in the calling party number table in RAM 103. If the number is being registered, the procedure is terminated to return to step S101.

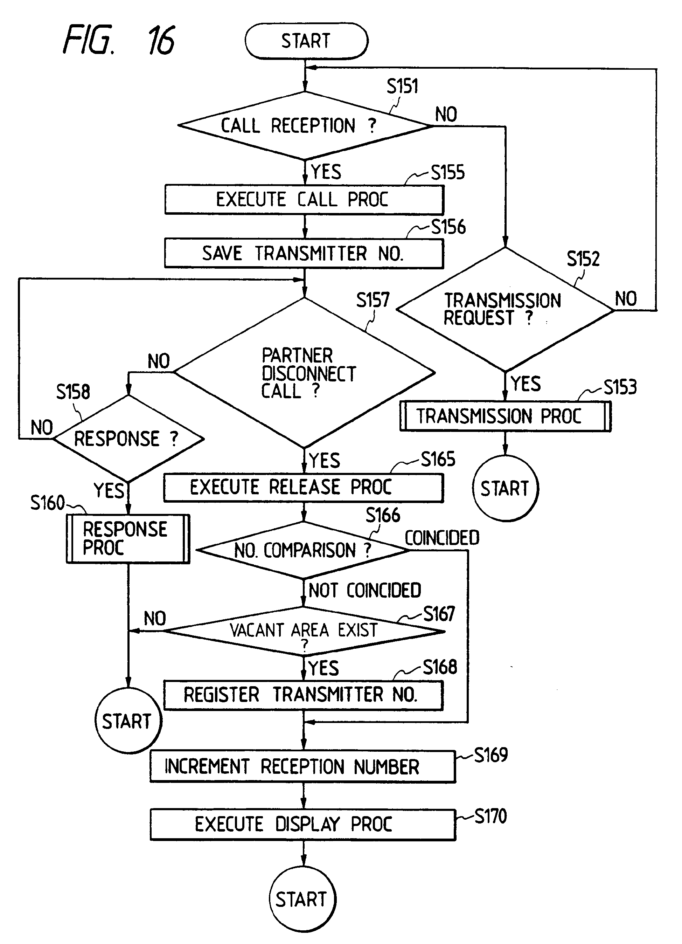

The calling party number table stores therein an abandoned calling party number and has the structure as shown in Fig. 14 wherein six calling party numbers 71 to 76 can be stored at a maximum.

If there is not stored a calling party number coincident with the received number, then the control advances from step S116 to step S117 whereat it is checked if there is a vacant area in the calling party number table. If there is no vacant area, the number cannot be stored so that the procedure is terminated.

Alternatively, if there is a vacant area, the control advances from step S117 to step S118 whereat the received calling party number (the contents in the memory 150 shown in Fig. 13) is stored in the vacant area to thereafter terminate the procedure.

If there is a key entry, the control advances from step S103 to S120 whereat it is checked if the input key is the display key 115 or not. If not, at step S121 it is checked if the input key is the delete key 116 or not. If not, the control advances to step S122 whereat it is checked if the input key is the dial-transmission-key 111. If not, the key input is not correct so that it is neglected to return to step S101.

If the input key is the display key 115, the control advances from step S120 to step S125 whereat the display/dial-transmission-key control unit 10 is instructed to make the contents in the calling party number table of RAM 103 to be displayed on the display unit 110, to thereafter return to step S101. A display example of the display unit 110 is shown in Fig. 15. As seen from Fig. 15, all the contents in the calling party number table are displayed at the same time. In Fig. 15, the registered contents as shown in Fig. 14 are displayed.

If the input key is the dial-transmission-key 111, the control advances from step S122 to step S126 whereat it is checked if the handset 114 is being off-hooked. If affirmative, the input key is not correct and neglected to return to step S101.

If the handset 114 is being off-hooked, at step S127 the calling party number in the calling party number table corresponding to the input dial-transmission-key is identified and read out. Six dial-transmission keys 111-1 to 111-6 are mounted at the positions, outside of the display area, corresponding to the six registered calling party number display areas on the display unit 110. Upon depression of any one of the dial-transmission-keys, the control advances from step S126 to S127 whereat the calling party number in the calling party number table corresponding to the input dial-transmission-key is identified and read out.

The dial-transmission-key 111-1 shown in Fig. 15 corresponds to the calling party number 171, key 111-2 to number 172, key 111-3 to number 173, key 111-4 to number 174, key 111-5 to number 175, and key 111-6 to number 176.

At the next step S128 it is determined if the calling party number corresponding to the input dial-transmission-key is effective, that is, if the calling party number already registered has been selected or if the dial-transmission-key corresponding to the vacant area (173 to 176 in Fig. 15) has been depressed.

If the dial-transmission-key 111 corresponding to a vacant area is input, it is an incorrect key input so that the key input is regarded as invalid to thereafter return to step S101. If the calling party number corresponding to the input dial-transmission-key 111 is being registered (if effective), the control advances from step S128 to step S129 whereat the ISDN interface 104 is controlled to conduct a call procedure to ISDN 130 and send the calling party number read at step S130 to the connected ISDN 130, to thereby enter into a state of calling a desired communication party. At step S131, a response from the communication party is waited. If the communication party responds, a speech procedure is carried out at steps S132 and S133. After speech completion, a circuit release procedure is executed at step S134 to thereafter return to step S101. If the called party does not respond for a long time during the call procedure and the ringing is made to stop for interception of the call procedure, the handset 114 is on-hooked. Upon on-hook of the handset 114, the call procedure interception is immediately notified to the ISDN interface 104 via the speech communication circuit 105, to thereby execute the circuit release procedure.

If the input key is the delete key 116, the control advances from step S121 to step S140 whereat the dial-transmission-key 111 to be input next is waited. Upon input of the dial-transmission-key 111, at step S141 the calling party number table at the area corresponding to the input dial-transmission-key 111 is cleared. At step S142 the display/ dial-transmission-key control unit 10 is caused to make the contents of the up-dated calling party number table to be displayed on the display unit 110.

As described so far, if an operator is not present and a call reception cannot be responded to, the received calling party number is stored and displayed. Therefore, the calling party can be identified and proper measure can be made smoothly.

Further, there is provided a one-to-one correspondence between the dial-transmission-keys 111 and the calling party numbers in the calling party number table. Therefore, while displaying the calling party numbers, the dial-transmission-key 111 corresponding to the displayed calling number can be entered to readily call the calling party at once.

All the stored calling party numbers are displayed on the display unit 110. The numbers may be sequentially displayed in accordance with the number of depressions of the display key 115 or in accordance with the time duration of depression. Without provideing a plurality of dial-transmission-keys 111, only a single dial-transmission-key may be used to enter a displayed calling party numbers.

Fig. 16 is a flow chart a part of which is a modification of the flow chart shown in Fig. 12A. The flow chart shown in Fig. 16 is executed under control of CPU 101 shown in Fig. 10.

Generally, it is checked at steps S151 and S152 if there is a call reception from ISDN 130 or if there is a transmission request upon off-hook of the handset 114.

If the handset 114 is off-hooked, the transmission request is initiated so that the control advances from step S152 to step S153 whereat a transmission procedure is carried out. At step S153 an input of a calling party number from the ten-key 113 or the dial-transmission-key 111 after the off-hook of the handset 114 is waited, transmission to the communication partner identified by a communication partner number instructed from the ISDN interface 104 is carried out, and a desired communication procedure is conducted in a accordance with a response from the communication partner. In this case, if there is a call reception to be described later and no response thereto, and if transmission to the communication partner having the calling party number stored in RAM 103 is conducted, the dial-transmission-key 111 corresponding to the display on the display unit 109 is entered to effect an automatic transmission procedure to the communication partner corresponding to the display.

If a call reception is initiated from ISDN 130, a call reception command is sent therefrom. Therefore, this command is received at the ISDN interface 104 and sent to CPU 101 which analyzes it in order to judge if there is a presence of a call reception. Then, the control advances from step S151 to step S155 whereat a ringing procedure is performed. At the same time, the calling party number contained in the call reception command received at step S156 is picked up and stored in RAM 103 at a predetermined area. The calling party number storage area in RAM 103 is an area wherein a single calling party number only is temporarily stored, as shown at 150 in Fig. 13.

At the next steps S157 and S158, the ringing state is maintained until the communication partner disconnects the call or off-hookd the handset 114. If the handset 114 is off-hooked in response to the ringing, the control advances from step S158 to step S160 to perform a communication procedure relative to ISDN 130.

Alternatively, if there is no response during the ringing, and if the calling party abandons the communication and sends a communication party disconnection signal to disconnect the call, then the control advances from step S157 to step S165. At step S165 a release procedure request is output to the ISDN interface 104 to perform the release procedure relative to ISDN 130. At the next step S166, it is checked if the calling party number saved at step S166 is registered in the calling party number table in RAM 103. If the number is being registered, the control advances to step S169.

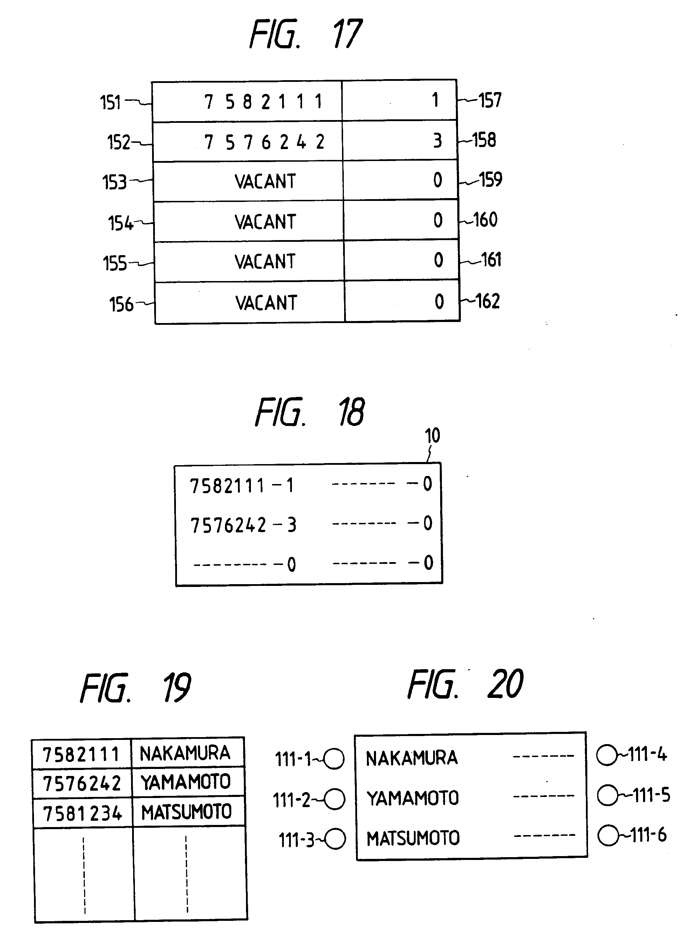

The calling party number table stores therein an abandoned calling party number and the number of call receptions from the abandoned calling party in one-to-one correspondence to each other and has the structure as shown in Fig. 17. In Fig. 17, reference numerals 151 to 156 represent the calling party number storage areas, and 157 to 162 represent the call reception number storage areas. The calling party number storage area 151 corresponds to the call reception number storage area 157, and so on. The call reception number storage areas 157 to 162 each are set at "0" at the initial condition where no calling party number is registered.

If there is not searched a coincident calling party number, the control advances from step S166 to step S167 whereat it is checked if there is a vacant area of the calling party number storage area in the calling party number table. If there is no vacant area, the procedure terminates.

Alternatively, if there is a vacant area, the control advances from step S167 to step S168 whereat the received calling party number (the contents in the memory 150 shown in Fig. 13) is stored in the vacant area among the calling number storage areas 151 to 156 to thereafter advance to step S169.

At step S169, the number of call receptions for the received calling party number stored in the calling party number table is incremented by 1 to thereafter advance to step S170 whereat the contents of the calling party number table are displayed on the display unit 110 under control of the display/dial-transmission-key control unit 106. At step S168 and/or step S170, the contents of the up-dated calling party number table are displayed.

A display example on the display unit 110 is shown in Fig. 18. As seen from Fig. 18, all the contents registered in the calling party number table are displayed at once. In Fig. 18, the registered contents as shown in Fig. 17 are shown by way of example. Six dial-transmission keys 111 are mounted at the positions, outside of the display area, corresponding to the six registered calling party number display areas on the display unit. Upon depression of any one of the dial-transmission-keys, at the transmission procedure step S153 the calling party number is read from the calling party number table to effect a transmission to the calling party at once.

As described so far, if an operator is not present and a call reception cannot be responded to, the received calling party number together with the number of call receptions from the concerned calling party can be stored and displayed. Therefore, the call reception number from a same calling party can be recognized. Based on the call reception number, it can be determined if the call is required to be responded quickly, to thus allow proper measure for that call smoothly.

Further, there is provided a one-to-one correspondence between the dial-transmission-keys 111 and the calling party numbers in the calling party number table. Therefore, while displaying the calling party numbers, the dial-transmission-key 111 corresponding to the displayed calling number can be entered to readily call the calling party at once.

In the above-described cases, the calling party number is displayed. A calling party name may also be displayed by previously storing calling party names in RAM in correspondence with calling party numbers. For example, names corresponding to calling party numbers are stored in RAM 103 as shown in Fig. 19. Therefore, when a call is received during absence, the name is searched based on the number information and displayed. This procedure is carried out at step S125 shown in Fig. 12. A display example is shown in Fig. 20. An operator can therefore readily identify the calling party during absence.

Further, in the above a telephone set and facsimile apparatus have been used as communication terminal equipments. The invention is also applicable to other communication apparatus such as telex apparatus and the like.

## Claims

1. A communication apparatus comprising;
reception means (**104**) for receiving a calling party number;
means for judging (**101**) whether the call reception from a communication network (**130**) is responded or not;
memory means (**103**) for storing, if no response is made to said call reception, said calling party number received by said reception means (**104**); and
display means (**110**) for displaying said calling party number stored in said memory means (**103**);
said communication apparatus being **characterized by**
count means (**S169**) for counting the number of call receptions for said calling party number stored in said memory means (**103**); and
means for notifying (**106**) the count result by said count means (**S169**);
wherein said notifying means (**106**) outputs said count result to said display means (**110**) in order to achieve a display of said count result together with said stored calling party number.

2. A communication apparatus according to claim 1, **characterized by** further comprising automatic calling means (S127) for reading said calling party number stored in said memory means (103) and performing an automatic call.

3. A communication apparatus according to claim 2, **characterized in that** said automatic calling means (**S127**) performs an automatic call in response to a depression of a one-touch dial key (**111**).

4. A communication apparatus according to any one of the preceding claims, **characterized by** further comprising means for deleting (**S142**) said calling party number stored in said memory means (**103**).

5. A communication apparatus according to any one of the preceding claims, **characterized in that** said display means (**110**) displays name information corresponding to said calling party number stored in said memory means (**103**).

6. A communication apparatus according to any one of the preceding claims, **characterized in that** said memory means (**103**) is capable of storing calling party numbers for a plurality of calling party equipment units which do not respond to a call reception.

7. A communication apparatus according to claim 6, **characterized in that** said display means (**110**) sequentially displays information about said plurality of calling party equipment units stored in said memory means (**103**) in response to a depression of a single manual switch (**115**).

8. A communication apparatus according to claim 6 or 7, **characterized in that** said memory means (**103**) comprises a plurality of memory areas (**151-156**) each being capable of storing at least a calling party number; wherein a calling party number is stored only if said calling party number is not already stored and at least one of said memory areas (**151-156**) is vacant.

## Patentansprüche

1. Kommunikationsgerät, mit:
Empfangsmitteln (104) zum Empfang einer Teilnehmernummer des Anrufenden;
Mittel zur Beurteilung (101), ob der aus einem Kommunikationsnetz empfangene Ruf beantwortet wird;
Speichermitteln (103) zur Speicherung der von den Empfangsmitteln (104) empfangenen Teilnehmernummer des Anrufenden, wenn keine Antwort auf den Rufeingang erfolgt; und mit Anzeigemitteln (110) zur Anzeige der in den Speichermitteln (103) gespeicherten Teilnehmernummer des Anrufenden;
**gekennzeichnet durch**
Zählmittel (S169) zur Zählung der Anzahl von Rufeingängen zur in den Speichermittel (103) gespeicherten Teilnehmernummer des Anrufenden; und durch
Mittel zur Mitteilung (106) des Zählergebnisses aus dem Zählmittel (S169);
wobei das Meldemittel (106) das Zählergebnis an die Anzeigemittel (110) ausgibt, um eine gemeinsame Anzeige des Zählergebnisses mit der gespeicherten Teilnehmernummer des Anrufenden zu erreichen.

2. Kommunikationsgerät nach Anspruch 1, **dadurch gekennzeichnet**, daß des weiteren automatische Rufmittel (S127) zum Lesen der in dem Speichermittel (103) gespeicherten Teilnehmernummer des Anrufenden und zur Ausführung eines automatischen Rufs vorgesehen sind.

3. Kommunikationsgerät nach Anspruch 2, **dadurch gekennzeichnet**, daß das automatische Rufmittel (S127) einen automatischen Ruf abhängig von der Betätigung einer Zielwahltaste (111) ausführt.

4. Kommunikationsgerät nach einem der vorstehenden Ansprüche, **dadurch gekennzeichnet**, daß des weiteren Mittel zum Löschen (S142) der in dem Speichermittel (103) gespeicherten Teilnehmernummer des Anrufenden vorgesehen sind.

5. Kommunikationsgerät nach einem der vorstehenden Ansprüche, **dadurch gekennzeichnet**, daß das Anzeigemittel (110) Nameninformationen zu der in dem Speichermittel (103) gespeicherten Teilnehmernummer des Anrufenden anzeigt.

6. Kommunikationsgerät nach einem der vorstehenden Ansprüche, **dadurch gekennzeichnet**, daß das Speichermittel (103) in der Lage ist, Teilnehmernummern von Anrufenden für eine Vielzahl von Geräteinheiten der nicht auf einen Rufeingang reagierenden Anrufer zu speichern.

7. Kommunikationsgerät nach Anspruch 6, **dadurch gekennzeichnet**, daß das Anzeigemittel (110) abhängig vom Betätigen eines einzigen Handschalters (115) sequenziell Informationen über die Vielzahl von Geräteinheiten der Anrufer anzeigt, die in dem Speichermittel (103)gespeichert sind.

8. Kommunikationsgerät nach Anspruch 6 oder 7, **dadurch gekennzeichnet**, daß das Speichermittel (103) eine Vielzahl von Speicherbereichen (151 bis 156) umfaßt, die jeweils in der Lage sind, wenigstens eine Teilnehmernummer des Anrufers zu speichern; wobei eine Teilnehmernummer des Anrufers nur dann gespeichert wird, wenn die Teilnehmernummer des Anrufes nicht schon gespeichert ist und wenigstens einer der Speicherbereiche (151 bis 156) frei ist.

## Revendications

1. Appareil de communication comprenant:
un moyen (104) de réception pour recevoir le numéro d'un appelant;
un moyen (101) pour juger si la réception d'appel provenant d'un réseau (130) de communication fait l'objet ou non d'une réponse;
un moyen (103) à mémoire pour stocker, si aucune réponse n'est fournie à ladite réception d'appel, ledit numéro d'appelant reçu par ledit moyen (104) de réception; et
un moyen (110) d'affichage pour afficher ledit numéro d'appelant stocké dans ledit moyen (103) à mémoire;
ledit appareil de communication étant caractérisé par
un moyen (S169) de comptage pour compter le nombre de réceptions d'appels correspondant audit numéro d'appelant stocké dans ledit moyen (103) à mémoire; et
un moyen pour indiquer (106) le résultat du comptage effectué par ledit moyen (S169) de comptage;
dans lequel ledit moyen (106) d'indication fournit ledit résultat de comptage audit moyen (110) d'affichage afin de produire un affichage dudit résultat de comptage en association avec ledit numéro d'appelant stocké.

2. Appareil de communication selon la revendication 1, caractérisé en outre par le fait qu'il comprend un moyen (S127) d'appel automatique pour lire ledit numéro d'appelant stocké dans ledit moyen (103) à mémoire et effectuer un appel automatique.

3. Appareil de communication selon la revendication 2, caractérisé en ce que ledit moyen (S127) d'appel automatique effectue un appel automatique en réponse à l'appui d'une touche (111) de numérotation à effleurement.

4. Appareil de communication selon l'une quelconque des revendications précédentes, caractérisé par le fait qu'il comprend en outre un moyen pour effacer (S142) ledit numéro d'appelant stocké dans ledit moyen (103) à mémoire.

5. Appareil de communication selon l'une quelconque des revendications précédentes, caractérisé en ce que ledit moyen (110) d'affichage affiche une information de nom correspondant audit numéro d'appelant stocké dans ledit moyen (103) à mémoire.

6. Appareil de communication selon l'une quelconque des revendications précédentes, caractérisé en ce que ledit moyen (103) à mémoire est capable de stocker des numéros d'appelants correspondant à une pluralité de matériels appelants qui ne répondent pas à la réception d'un appel.

7. Appareil de communication selon la revendication 6, caractérisé en ce que ledit moyen (110) d'affichage affiche séquentiellement des informations concernant ladite pluralité de matériels appelants stockés dans ledit moyen (103) à mémoire en réponse à l'appui d'un commutateur (115) manuel unique.

8. Appareil de communication selon la revendication 6 ou 7, caractérisé en ce que ledit moyen (103) à mémoire comprend un ensemble de zones (151-156) de mémoire capables chacune de stocker au moins un numéro d'appelant; un numéro d'appelant n'étant stocké que si ledit numéro d'appelant n'a pas déjà été stocké et si au moins l'une desdites zones (151-156) de la mémoire est libre.
